# EUROPEAN PATENT APPLICATION

(11) **EP 4 142 227 A1**
(43) Date of publication of application: **01.03.2023**
(21) Application number: 21804760.3
(22) Date of filing: 11.05.2021
(51) Int. Cl.: H04L 12/741, H04W 4/06

(54) **METHOD AND APPARATUS FOR SENDING MULTICAST MESSAGE**

(30) Priority: 11.05.2020 CN 202010393103; 03.07.2020 CN 202010632551
(71) Applicant: Huawei Technologies Co., Ltd., Longgang District, Shenzhen, Guangdong 518129 (CN)
(72) Inventor: XIE, Jingrong, Shenzhen, Guangdong 518129 (CN); YAN, Gang, Shenzhen, Guangdong 518129 (CN); GENG, Xuesong, Shenzhen, Guangdong 518129 (CN)
(74) Representative: Gill Jennings & Every LLP
(86) International application number: PCT/CN2021/093063
(87) International publication number: WO 2021/228090

(57) **Abstract**

This application provides a method and an apparatus for sending a multicast packet. In the method, an ingress device obtains an identifier of a region corresponding to a received multicast packet. The ingress device obtains, based on the region identifier and a forwarding entry, an address of an intermediate device that is used to forward the multicast packet to the region. The forwarding entry includes the region identifier and the address of the intermediate device. The ingress device sends the multicast packet based on the address of the intermediate device. An intermediate device obtains, based on a multicast packet from an ingress device, an identifier of a region corresponding to the multicast packet. The intermediate device obtains an address of a next-hop device based on the region identifier and a forwarding entry. The forwarding entry includes the region identifier and the address of the next-hop device. The intermediate device sends the multicast packet based on the address of the next-hop device. This method can save a network resource.

## Description

This application claims priority to Chinese Patent Application No. 202010393103.4, filed with the China National Intellectual Property Administration on May 11, 2020 and entitled "MULTICAST FORWARDING METHOD AND APPARATUS", and claims priority to Chinese Patent Application No. 202010632551.5, filed with the China National Intellectual Property Administration on July 3, 2020 and entitled "METHOD AND APPARATUS FOR SENDING MULTICAST PACKET", which are incorporated herein by reference in their entireties.

### TECHNICAL FIELD

This application relates to the field of communications technologies, and more specifically, to a method and an apparatus for sending a multicast packet.

### BACKGROUND

Bit index explicit replication (Bit Index Explicit Replication, BIER for short) is common multicast architecture. A BIER header encapsulation format and an encapsulation method are defined in an Internet engineering task force (Internet Engineering Task Force, IETF for short) standard. BIER encapsulation may be, for example, based on the multi-protocol label switching (Multi-Protocol Label Switching, MPLS for short), the Ethernet, and the Internet protocol version 6 (Internet protocol version 6, IPv6 for short). The IPv6-based BIER (or BIERv6) has relatively good flexibility in deployment of cross-autonomous system (Autonomous System, AS for short) domains.

In a BIERv6-based cross-domain multicast scenario, a multicast source may communicate with a provider edge (Provider Edge, PE for short) device of a backbone network. A plurality of multicast receivers may communicate with a plurality of PE devices of a metropolitan area network. The PE device communicating with the multicast source may send, by using an autonomous system boundary router (Autonomous System Boundary Router, ASBR for short) of the backbone network, a multicast packet to the PE device communicating with the multicast receiver. In a BIERv6-based multicast scenario, any PE device may be provided with a bit forwarding router (Bit Forwarding Router, BFR for short) identifier (BFR-id). When the PE devices communicating with the multicast receivers are located in different AS domains and need to receive a multicast packet from a specific multicast source, the PE device communicating with the multicast source needs to replicate a plurality of multicast packets and send the multicast packets to the AS domains in which the PE devices communicating with the multicast receivers are located, which causes a waste of network resources.

### SUMMARY

This application provides a method and an apparatus for sending a multicast packet, to save a network resource.

According to a first aspect, a method for sending a multicast packet is provided. The method includes: An intermediate device obtains, based on a multicast packet from an ingress device, an identifier of a region corresponding to the multicast packet. The intermediate device obtains an address of a next-hop device based on the region identifier and a forwarding entry. The forwarding entry includes the region identifier and the address of the next-hop device. The intermediate device sends the multicast packet based on the address of the next-hop device.

In the foregoing method, the intermediate device, as a transit node between one or more egress devices and the ingress device, may forward the multicast packet based on the determined region identifier after receiving the multicast packet of the ingress device. In a general cross-domain multicast scenario, the multicast packet is replicated and forwarded from a PE device communicating with a multicast source. However, in this method, the intermediate device serving as the transit node is positioned based on the region identifier, and the intermediate device sends the multicast packet to the next-hop device. Then, the next-hop device implements operations of replicating and forwarding the multicast packet, to reduce traffic between the ingress device and the intermediate device (less occupy a network resource to send the replicated multicast packet). Optionally, when the next-hop device is not the egress device, traffic between the intermediate device and the next-hop device can be further reduced (a network resource is less occupied to send the replicated multicast packet).

In a possible implementation, the region includes one or more AS domains. The next-hop device may be the egress device or an ASBR in an AS domain in which the egress device is located. The egress device is an edge device that can communicate with a multicast receiver. The egress device may also be referred to as a bit forwarding egress router (bit forwarding egress router, BFER). The ingress device may be an edge device communicating with the multicast source. The ingress device may also be referred to as a bit forwarding ingress router (bit forwarding ingress router, BFIR). The intermediate device and the ingress device are devices in a BIER cross-domain network scenario.

In a possible implementation, the multicast packet includes the region identifier. That the intermediate device obtains, based on the multicast packet from the ingress device, the identifier of the region corresponding to the multicast packet includes: The intermediate device obtains the region identifier from the multicast packet.

In a possible implementation, the multicast packet includes an identifier of the intermediate device. That the intermediate device obtains, based on the multicast packet from the ingress device, the identifier of the region corresponding to the multicast packet includes: The intermediate device obtains, based on the identifier of the intermediate device in the multicast packet, the identifier of the region corresponding to the identifier of the intermediate device. In this implementation, a correspondence may be preconfigured on the intermediate device. The correspondence includes the identifier of the intermediate device and the region identifier. This manner has better compatibility. Excessive improvement or processing does not need to be performed on the multicast packet.

In a possible implementation, the method further includes: The intermediate device receives the address of the next-hop device and the identifier of the region to which the next-hop device belongs that are sent by the next-hop device. The intermediate device obtains the forwarding entry based on the region identifier and the address of the next-hop device.

In a possible implementation, the method further includes: The intermediate device receives an identifier of the next-hop device and the identifier of the region to which the next-hop device belongs that are sent by the next-hop device. The intermediate device obtains the address of the next-hop device based on the identifier of the next-hop device. The intermediate device obtains the forwarding entry based on the region identifier and the address of the next-hop device.

In a possible implementation, the method further includes: The intermediate device receives a range that is of an identifier of a bit forwarding router BFR in a destination AS domain and that is sent by the next-hop device. The destination AS domain is an AS domain to which the next-hop device belongs and that is included in the region. The forwarding entry further includes the range of the identifier of the BFR in the destination AS domain.

In a possible implementation, the multicast packet further includes the range of the BFR identifier. The method further includes: The intermediate device determines the forwarding entry based on the region identifier and the range of the BFR identifier.

In a possible implementation, the method further includes: The intermediate device sends, to the ingress device, the address of the intermediate device and an identifier of a region to which the intermediate device belongs.

In a possible implementation, the method further includes: The intermediate device sends, to the ingress device, a range of an identifier of a BFR in an AS domain to which the intermediate device belongs. The AS domain to which the intermediate device belongs is included in the region to which the intermediate device belongs.

According to a second aspect, a method for sending a multicast packet is provided. The method includes: An ingress device obtains an identifier of a region corresponding to a received multicast packet. The ingress device obtains, based on the region identifier and a forwarding entry, an address of an intermediate device that is used to forward the multicast packet to the region. The forwarding entry includes the region identifier and the address of the intermediate device. The ingress device sends the multicast packet based on the address of the intermediate device.

In the foregoing method, the ingress device may send the multicast packet to the intermediate device based on the region identifier, and does not replicate and forward the multicast packet as in a general cross-domain multicast scenario, to reduce traffic between the ingress device and the intermediate device (less occupy a network resource to send the replicated multicast packet). The intermediate device and the ingress device are devices in a BIER cross-domain network scenario.

In a possible implementation, the method further includes: The ingress device receives the address of the intermediate device and the region identifier that are sent by the intermediate device. The ingress device obtains the forwarding entry based on the address of the intermediate device and the region identifier.

In a possible implementation, the method further includes: The ingress device receives an identifier of the intermediate device and the region identifier that are sent by the intermediate device. The ingress device determines the address of the intermediate device based on the identifier of the intermediate device. The ingress device obtains the forwarding entry based on the address of the intermediate device and the region identifier.

In a possible implementation, the method further includes: The ingress device receives a range that is of an identifier of a BFR in a destination autonomous system AS domain and that is sent by the intermediate device. The destination AS domain is an AS domain to which the multicast packet needs to be sent and that is included in the region. The forwarding entry further includes the range of the identifier of the BFR in the destination AS domain.

In a possible implementation, the method further includes: The ingress device determines the forwarding entry based on the range of the identifier of the BFR in the destination AS domain and the region identifier.

In a possible implementation, the multicast packet includes the region identifier. That the ingress device obtains the identifier of the region corresponding to the received multicast packet includes: The ingress device obtains the region identifier from the multicast packet. Alternatively, the multicast packet includes the identifier of the intermediate device, and the multicast packet includes the region identifier. That the ingress device obtains the identifier of the region corresponding to the received multicast packet includes: The ingress device obtains, based on the identifier of the intermediate device in the multicast packet, the identifier of the region corresponding to the identifier of the intermediate device.

According to a third aspect, a method for generating a forwarding entry is provided. The method further includes: An intermediate device obtains, from a next-hop device, an address of the next-hop device and an identifier of a region to which the next-hop device belongs. The intermediate device obtains a forwarding entry based on the region identifier and the address of the next-hop device.

In the foregoing method, the intermediate device may obtain, based on a parameter obtained from the next-hop device, the forwarding entry used to forward a multicast packet, to reduce complexity of manual configuration after a network structure changes, thereby more flexibly and quickly refreshing the entry used to forward the multicast packet.

In a possible implementation, that the intermediate device obtains, from the next-hop device, the address of the next-hop device and the identifier of the region to which the next-hop device belongs includes: The intermediate device receives the region identifier and the address of the next-hop device that are sent by the next-hop device.

In a possible implementation, that the intermediate device obtains, from the next-hop device, the address of the next-hop device and the identifier of the region to which the next-hop device belongs includes: The intermediate device receives an identifier of the next-hop device and the region identifier that are sent by the next-hop device. The intermediate device obtains the address of the next-hop device based on the identifier of the next-hop device. The identifier of the next-hop device may be other information or parameter used to identify the next-hop device other than the address. The intermediate device may convert the identifier of the next-hop device into the address of the next-hop device based on a preset algorithm, or the intermediate device may obtain the address of the next-hop device based on a correspondence and the identifier of the next-hop device. The correspondence includes the identifier of the next-hop device and the address of the next-hop device.

In a possible implementation, the method further includes: The intermediate device receives a range that is of an identifier of a bit forwarding router BFR in a destination AS domain and that is sent by the next-hop device. The destination AS domain is an AS domain to which the next-hop device belongs and that is included in the region. The forwarding entry further includes the range of the identifier of the BFR in the destination AS domain.

In the foregoing method, after the forwarding entry is generated, the intermediate device may send the multicast packet from an ingress device based on the forwarding entry, to reduce traffic between the ingress device and the intermediate device (less occupy a network resource to send the replicated multicast packet). Optionally, when the next-hop device is not an egress device, traffic between the intermediate device and the next-hop device can be further reduced (a network resource is less occupied to send the replicated multicast packet).

According to a fourth aspect, a method for generating a forwarding entry is provided. The method further includes: An ingress device obtains an address of an intermediate device and a region identifier from the intermediate device. The ingress device obtains a forwarding entry based on the address of the intermediate device and the region identifier.

In the foregoing method, the ingress device may obtain, based on a parameter obtained from the intermediate device, the forwarding entry used to forward the multicast packet, to reduce complexity of manual configuration after a network structure changes, thereby more flexibly and quickly refreshing the entry used to forward the multicast packet.

In a possible implementation, that the ingress device obtains the address of the intermediate device and the region identifier from the intermediate device includes: The ingress device receives the address of the intermediate device and the region identifier that are sent by the intermediate device.

In a possible implementation, that the ingress device obtains the address of the intermediate device and the region identifier from the intermediate device includes: The ingress device receives an identifier of the intermediate device and the region identifier that are sent by the intermediate device. The ingress device determines the address of the intermediate device based on the identifier of the intermediate device. The identifier of the intermediate device may be other information or parameter used to identify the intermediate device other than the address. The ingress device may convert the identifier of the intermediate device into the address of the intermediate device based on a preset algorithm, or the ingress device may obtain the address of the intermediate device based on a correspondence and the identifier of the intermediate device. The correspondence includes the identifier of the intermediate device and the address of the intermediate device.

In a possible implementation, the method further includes: The ingress device receives a range that is of an identifier of a BFR in a destination autonomous system AS domain and that is sent by the intermediate device. The destination AS domain is an AS domain to which the multicast packet needs to be sent and that is included in the region. The forwarding entry further includes the range of the identifier of the BFR in the destination AS domain.

In the foregoing method, after the forwarding entry is generated, the ingress device may send the multicast packet to the intermediate device based on the forwarding entry, to reduce traffic between the ingress device and the intermediate device (less occupy a network resource to send the replicated multicast packet).

According to a fifth aspect, an apparatus for sending a multicast packet is provided. The apparatus is disposed in an intermediate device. The apparatus includes a module configured to implement functions corresponding to the method provided in the first aspect or any one of the possible implementations of the first aspect; or the apparatus includes a module configured to implement functions corresponding to the method provided in the third aspect or any one of the possible implementations of the third aspect.

According to a sixth aspect, an apparatus for sending a multicast packet is provided. The apparatus is disposed in an ingress device. The apparatus includes a module configured to implement functions corresponding to the method provided in the second aspect or any one of the possible implementations of the second aspect; or the apparatus includes a module configured to implement functions corresponding to the method provided in the fourth aspect or any one of the possible implementations of the fourth aspect.

According to a seventh aspect, a device is provided. The device includes a processor and a memory storing instructions. When the instructions are executed by the processor, the device is enabled to perform the method provided in the first aspect or any one of the possible implementations of the first aspect. Alternatively, when the instructions are executed by the processor, the device is enabled to perform the method provided in the second aspect or any one of the possible implementations of the second aspect. Alternatively, when the instructions are executed by the processor, the device is enabled to perform the method provided in the third aspect or any one of the possible implementations of the third aspect. Alternatively, when the instructions are executed by the processor, the device is enabled to perform the method provided in the fourth aspect or any one of the possible implementations of the fourth aspect.

According to an eighth aspect, a computer-readable storage medium is provided. The computer-readable storage medium stores instructions. When the instructions are executed by a processor in a device, the device is enabled to perform the method provided in the first aspect or any one of the possible implementations of the first aspect. Alternatively, when the instructions are executed by a processor, a device is enabled to perform the method provided in the second aspect or any one of the possible implementations of the second aspect. Alternatively, when the instructions are executed by a processor, a device is enabled to perform the method provided in the third aspect or any one of the possible implementations of the third aspect. Alternatively, when the instructions are executed by a processor, a device is enabled to perform the method provided in the fourth aspect or any one of the possible implementations of the fourth aspect.

According to a ninth aspect, a system is provided. The system includes the apparatus according to the fifth aspect and the apparatus according to the sixth aspect.

### BRIEF DESCRIPTION OF DRAWINGS

FIG. 1 is a schematic diagram of a network scenario according to an embodiment of this application;
FIG. 2 is a schematic diagram of an interaction procedure of a multicast packet according to an embodiment of this application;
FIG. 3 shows a multicast scenario according to an embodiment of this application;
FIG. 4 shows another multicast scenario according to an embodiment of this application;
FIG. 5 shows another multicast scenario according to an embodiment of this application;
FIG. 6 is a schematic diagram of a structure of an apparatus for sending a multicast packet according to an embodiment of this application;
FIG. 7 is a schematic diagram of a structure of an apparatus for sending a multicast packet according to an embodiment of this application; and
FIG. 8 is a schematic diagram of a structure of a device according to an embodiment of this application.

### DESCRIPTION OF EMBODIMENTS

The term "ingress device" in the embodiments of this application indicates a device that is close to a multicast source and that can communicate with the multicast source in a cross-domain multicast process. For example, the ingress device may include a PE device in an AS domain in which the multicast source is located. The ingress device may be located in a backbone network, or may be located in a metropolitan area network. In a BIER-based cross-domain multicast embodiment, the ingress device may perform BIER encapsulation on a multicast packet from the multicast source. The term "egress device" in the embodiments of this application indicates a device that is close to a multicast receiver and that can communicate with the multicast receiver in a cross-domain multicast process. For example, the egress device may include a PE device communicating with the multicast receiver or a PE device in an AS domain to which the multicast receiver belongs. The egress device may be located in a metropolitan area network. In a BIER-based cross-domain multicast embodiment, the egress device may perform BIER decapsulation on the received multicast packet. The term "intermediate device" in the embodiments of this application indicates a device that is used to implement multicast forwarding between the ingress device and the egress device in a cross-domain multicast process. For example, the intermediate device may include an ASBR in the backbone network. The intermediate device may also be located in the metropolitan area network. The term "including" and deformation thereof in the embodiments of this application are open inclusiveness, that is, "including but not limited to". The term "based on" indicates "at least partly based on". The term "one embodiment" indicates "at least one embodiment". The term "another embodiment" indicates "at least one another embodiment". Definitions of other terms are provided in the following description. Although terms such as "first" and "second" may be used to describe various elements in this specification, these elements are not limited by these terms. The terms are merely used to distinguish one element from another element. The term "and/or" used in this specification includes any and all combinations of one or more of the listed terms.

During general hierarchical multicast, when BIERv6 cross-domain forwarding is performed from the backbone network to the metropolitan area network, PE devices may be distinguished by using BFR-ids. The BFR-ids of the PE devices are uniformly assigned. Therefore, a quantity of supported PE devices is limited by a quantity of digits of a BFR-id value. For example, if the BFR-id value is 16 bits, it cannot support more than 65535 PE devices. In common peer-to-peer multicast, the BFR-ids of the PE devices may be independently assigned, and therefore, more PE devices can be supported. However, the ingress device needs to forward a multicast packet to all AS domains. Especially, with network expansion, more AS domains are added. Even if there are relatively few PE devices in an AS domain, the ingress device still needs to perform forwarding to the AS domain, which causes a great traffic replication waste.

An embodiment of this application provides a method for sending a multicast packet. In this method, one region includes one or more AS domains. An intermediate device obtains one or more forwarding entries corresponding to a region. Any forwarding entry includes an identifier (identifier, ID) of the region and an associated address of each AS domain in the region. The address may be an address of any proper device associated with the AS domain. For example, the address may be an address of an intermediate device or an egress device in the AS domain, or may be an address of a device located at a downstream of an intermediate device on a path to the AS domain. After the intermediate device receives a multicast packet from an ingress device, the intermediate device determines an ID of a region to which the multicast packet is to be sent, and obtains a first forwarding entry based on the region ID. The first forwarding entry includes the region ID and an address of a next-hop device corresponding to a destination AS domain. Based on the address of the next-hop device in the first forwarding entry. The destination AS domain is an AS domain in which the egress device corresponding to the multicast packet is located. The intermediate device sends the multicast packet to the next-hop device based on the first forwarding entry. The ingress device may obtain one or more forwarding entries corresponding to the region. Any forwarding entry includes the region ID and an address of the intermediate device. After obtaining the multicast packet, the ingress device determines the ID of the region to which the multicast packet is to be sent, and obtains a second forwarding entry based on the region ID. The second forwarding entry includes the region ID and the address of the intermediate device. The ingress device sends the multicast packet to the intermediate device based on the second forwarding entry. In the method provided in this embodiment of this application, the forwarding entry that is used to forward the multicast packet to the region including the one or more AS domains is generated. A quantity of supported egress devices can be increased in each region. In addition, the ingress device sends a packet to a region in which the egress device is located, and does not need to send the packet to all the AS domains, thereby reducing a traffic replication waste.

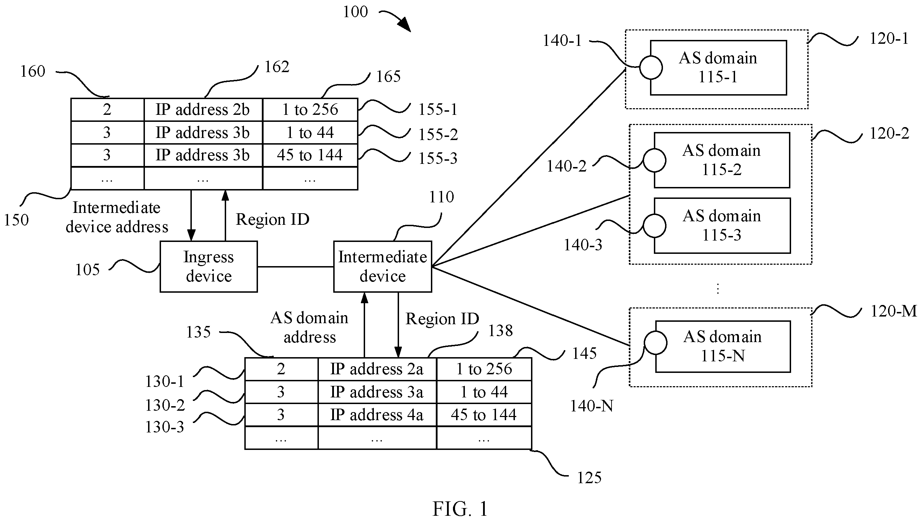

FIG. 1 is a schematic diagram of a network scenario according to an embodiment of this application. As shown in FIG. 1, an environment 100 is, for example, a part of a communications network, and may include a backbone network and a metropolitan area network. The environment 100 includes an ingress device 105 configured to send a multicast packet from a multicast source to an egress device communicating with a multicast receiver (not shown in the figure). The ingress device 105 may be directly connected to the multicast source (not shown), or connected to the multicast source by using an edge device on a user side. For example, the ingress device 105 may be a PE device in an AS domain in the backbone network or a PE device in an AS domain in the metropolitan area network.

The environment 100 further includes an intermediate device 110. In a direction from the ingress device 105 to the egress device, the intermediate device 110 is located in a downstream of the ingress device 105 in the backbone network or the metropolitan area network. The intermediate device 110 is configured to forward the multicast packet from the ingress device 105 to the egress device. In a possible implementation, the intermediate device 110 and the ingress device 105 are located in the same AS domain. For example, the ingress device 105 is a PE device in an AS domain in the backbone network or the metropolitan area network, and the intermediate device 110 may be an ASBR in the AS domain. In another possible implementation, the intermediate device 110 and the ingress device 105 may be located in different AS domains. For example, in an embodiment in which the ingress device 105 is in an AS domain in the backbone network, in a direction from the ingress device 105 to the egress device, the AS domain to which the intermediate device 110 belongs is located in a downstream of the AS domain to which the ingress device 105 belongs.

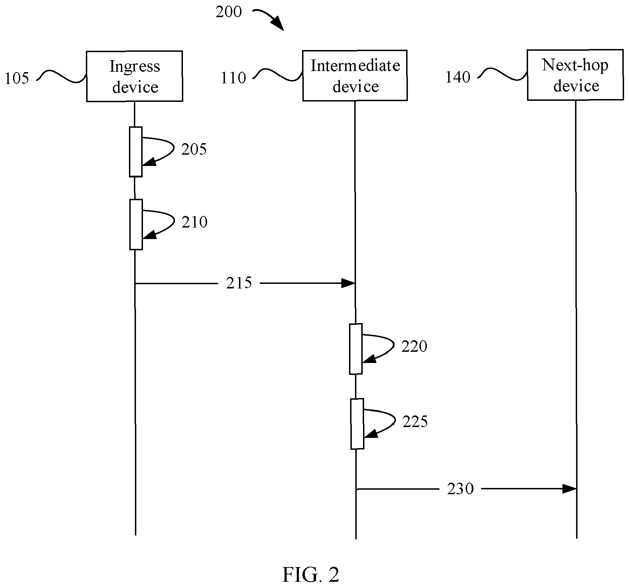

In the environment 100, a plurality of AS domains, for example, AS domains identified by using 115-1, 115-2, 115-3, ..., and 115-N in FIG. 2 can communicate with a multicast receiver. Herein, N is an integer greater than or equal to 1. The AS domains 115-1, ..., and 115-N may be located in the metropolitan area network. The N AS domains 115-1, ..., and 115-N are divided into M regions 120-1, ..., and 120-M. Herein, M is an integer greater than or equal to 1 and less than or equal to N. As shown in FIG. 1, the region 120-1 includes the AS domain 115-1. The region 120-2 includes the AS domains 115-2 and 115-3. The region 120-M includes the AS domain 115-N. In a possible implementation, when M is 1, the region 120-1 includes the N AS domains 115-1, 115-2, ..., and 115-N. One or more AS domains included in the region may be configured and/or updated according to a requirement. The AS domain 115-1, 115-2, 115-3, ..., or 115-N is also referred to as an AS domain 115, and the region 120-1, ..., or 120-M is also referred to as a region 120.

As shown in FIG. 1, the intermediate device 110 stores a forwarding table 125. Each row is one forwarding entry. The forwarding table 125 includes forwarding entries 130-1, 130-2, 130-3, and the like. The individual forwarding entries 130-1, 130-2, and 130-3 in the forwarding table 125 are also referred to as forwarding entries 130 (also referred to as first forwarding entries 130).

A column 135 of the forwarding table 125 records an ID of a region (also referred to as a "region ID"). A column 138 of the forwarding table 125 records addresses of next-hop devices 140-1, 140-2, ..., and 140-N belonging to a region identified by a region ID. The address of the next-hop device may be an IP address. The next-hop devices 140-1, 140-2, ..., and 140-N are edge devices of an AS domain to which the next-hop devices belong, and may be referred to as ASBRs. As shown in FIG. 1, a region ID that is of the region 120-1 and that is recorded in the column 135 of the forwarding table 125 is represented as "2". An edge device of the AS domain 115-1 included in the region 120-1 is the next-hop device 140-1. An address of the next-hop device 140-1 is represented as an "IP address 2a". A region ID of the region 120-2 is represented as "3". An edge device of the AS domain 115-2 included in the region 120-2 is the next-hop device 140-2. An edge device of the AS domain 115-3 included in the region 120-2 is the next-hop device 140-3. An address of the next-hop device 140-2 is represented as an "IP address 3a". An address of the next-hop device 140-3 is represented as an "IP address 4a".

The next-hop devices 140-1, 140-2, ..., and 140-N are also referred to as devices 140 below. In a possible implementation, the device 140 may be an ASBR in an AS domain to which the device 140 belongs. The device 140 may forward a multicast packet to one or more egress devices (not shown) included in the AS domain to which the device 140 belongs. The egress device may be a PE device included in an AS domain to which the egress device belongs. In another possible implementation, the device 140 may be an egress device in an AS domain to which the device 140 belongs. The intermediate device 110 may directly forward the multicast packet to the egress device of the AS domain. In still another possible implementation, when the ingress device 105 and the intermediate device 110 are located in the same AS domain of the metropolitan area network, the next-hop device 140 may be an ASBR in the AS domain of the backbone network.

In the example shown in FIG. 1, the forwarding table 125 further includes a column 145 that stores a range of BFR identifiers (also referred to as "BFR-id") corresponding to the AS domain to which the device identified by a parameter in the column 138 belongs. As shown in FIG. 1, in the column 145, a BFR-id range corresponding to the AS domain 115-1 to which the next-hop device 140-1 identified by the "IP address 2a" belongs is 1 to 256, that is, a BFR-id range that can be assigned for a bit forwarding egress router (BFER) (also referred to as an egress device) in the AS domain 115-1 is 1 to 256. In the column 145, a BFR-id range corresponding to the AS domain 115-2 to which the next-hop device 140-2 identified by the "IP address 3a" belongs is 1 to 44, that is, a BFR-id range that can be assigned for a BFER in the AS domain 115-2 is 1 to 44. In the column 145, a BFR-id range corresponding to the AS domain 115-3 to which the next-hop device 140-3 identified by the "IP address 4a" belongs is 45 to 144, that is, a BFR-id range that can be assigned for a BFER in the AS domain 115-3 is 45 to 144. Based on the BFR-id range, the AS domain 115-2 and the AS domain 115-3 in the same region 120-2 may be distinguished. The column 145 recording the BFR-id range is optional. For the region 120-1 that includes only the AS domain 115-1, the forwarding entry 130-1 corresponding to the region 120-1 may not include the BFR-id column 145.

The intermediate device 110 may receive, from the next-hop device 140, information indicating the address of the next-hop device 140 and the ID of the region to which the next-hop device 140 belongs, and establish the forwarding table 125 based on the received information. In a possible implementation, the next-hop device 140 may directly send, to the intermediate device 110 by using a BGP message, the address of the next-hop device 140 and the ID of the region to which the next-hop device 140 belongs. In another possible implementation, the next-hop device 140 may advertise a BGP message to the intermediate device 110 by using a route reflector (Route Reflector, RR for short). The BGP message includes the address of the next-hop device 140 and the ID of the region to which the next-hop device 140 belongs. Optionally, the next-hop device 140 may further advertise, to the intermediate device 110, a BFR-id range corresponding to the AS domain to which the next-hop device 140 belongs. For example, the next-hop device 140 directly advertises the BGP message to the intermediate device 110, or advertises the BGP message to the intermediate device 110 by using the RR. Correspondingly, the BGP message further includes the BFR-id range corresponding to the AS domain to which the next-hop device 140 belongs. For example, the BFR-id range that corresponds to the AS domain 115-2 to which the next-hop device 140-2 belongs and that is advertised to the intermediate device 110 by the next-hop device 140-2 in the AS domain 115-2 included in the region 120-2 is 1 to 44. The BFR-id range that corresponds to the AS domain 115-3 to which the next-hop device 140-3 belongs and that is advertised to the intermediate device 110 by the next-hop device 140-3 in the AS domain 115-3 included in the region 120-2 is 45 to 144.

To further simplify signaling, a default region ID may be set. A next-hop device included in an AS domain in a region that uses the default region ID may not send, to the intermediate device 110, an ID of a region to which the next-hop device belongs. The intermediate device 110 may record, in the forwarding table 125 according to a setting, the default region ID that is used by the region to which the next-hop device belongs.

As shown in FIG. 1, the ingress device 105 stores a forwarding table 150. The forwarding table 150 includes a plurality of forwarding entries that may be specifically forwarding entries 155-1, 155-2, 155-3, and the like. The forwarding entries 155-1, 155-2, and 155-3 included in the forwarding table 150 are also referred to as forwarding entries 155 (also referred to as second forwarding entries 155).

In a possible implementation, the ingress device 105 and the intermediate device 110 are located in the same AS domain. Correspondingly, a column 160 of the forwarding table 150 records a region ID, and a column 162 records the address that is of the intermediate device 110 and that corresponds to the region ID, for example, an IP address or another form of address. The intermediate device 110 may have a plurality of addresses. Each address corresponds to one region ID. In the forwarding table 150 shown in FIG. 1, an address that is of the intermediate device and that corresponds to the region ID "2" (for identifying the region 120-1) is an IP address 2b, and an address that is of the intermediate device and that corresponds to the region ID "3" (for identifying the region 120-2) is an IP address 3b. Optionally, the forwarding table 150 further includes a column 165 storing a BFR-id range. The column 165 records the BFR-id range in the region 120 identified by the region ID. For the region 120-2 including the plurality of AS domains 115-2 and 115-3, the plurality of forwarding entries 155-2 and 155-3 may be created in the forwarding table 150. The forwarding entry 155-2 records a BFR-id range: 1 to 44 corresponding to the AS domain 115-2. The forwarding entry 155-3 records the BFR-id range: 45 to 144 in the AS domain 115-3.

The ingress device 105 may obtain the region ID, the address of the intermediate device, and the BFR-id range from the intermediate device 110, and generate the forwarding table 150 based on the obtained information. For example, the intermediate device 110 may advertise, to the ingress device 105 by using the BGP message, the region ID, the address of the intermediate device 110, and the BFR-id range corresponding to the AS domain included in the region identified by the region ID. The intermediate device 110 may advertise a plurality of BGP messages. Each message includes the region ID, the address of the intermediate device 110, and the BFR-id range of the AS domain included in the region. The intermediate device 110 may advertise the BGP message by using the RR, or may directly advertise the BGP message. In an embodiment in which the default region ID is set, the advertised BGP message may not carry the region ID. Correspondingly, the ingress device 105 may learn according to a setting that the corresponding region uses the default region ID.

In this embodiment of this application, after determining the ID of the region to which the multicast packet is to be sent, the ingress device 105 obtains, based on the region ID, the second forwarding entry 155 that includes the region ID and the address of the intermediate device 110. The ingress device 105 sends the multicast packet to the intermediate device 110 based on the address of the intermediate device 110. After receiving the multicast packet, the intermediate device 110 determines the ID of the region to which the multicast packet is to be sent. The intermediate device 110 obtains, based on the region ID, a first forwarding entry 130 that records the region ID and the address of the next-hop device 140. The intermediate device 110 sends the multicast packet to the next-hop device 140 based on the address of the next-hop device 140 in the first forwarding entry 130. The intermediate device 110 and the ingress device 105 may obtain the forwarding tables 125 and 150 to one or more regions. Each region 120 may include one or more AS domains 115. Herein, BFR-id planning may be independently performed in the region 120, to support multicast packets to a relatively large quantity of egress devices. The forwarding table 125 on the intermediate device 110 includes addresses of next-hop devices of the plurality of AS domains 115 in the region 120 identified by the region ID obtained through locating based on the multicast packet. The ingress device 105 does not need to separately send the multicast packet to each AS region, to significantly improve multicast efficiency.

In another possible implementation, the ingress device 105 and the intermediate device 110 are located in different AS domains. An address recorded in the column 162 in the forwarding table 150 of the ingress device 105 may be an address of a forwarding device between the ingress device 105 and the intermediate device 110.

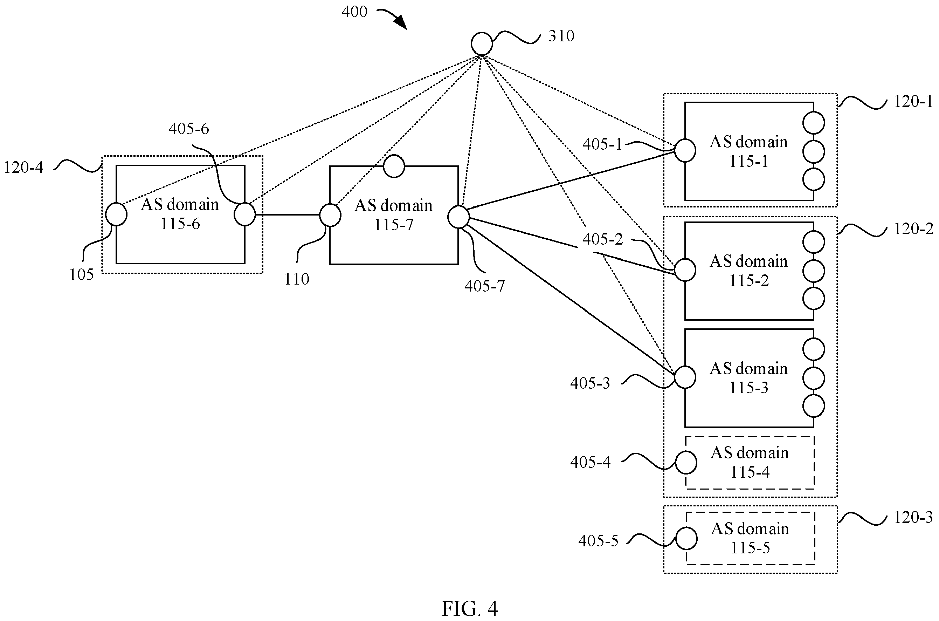

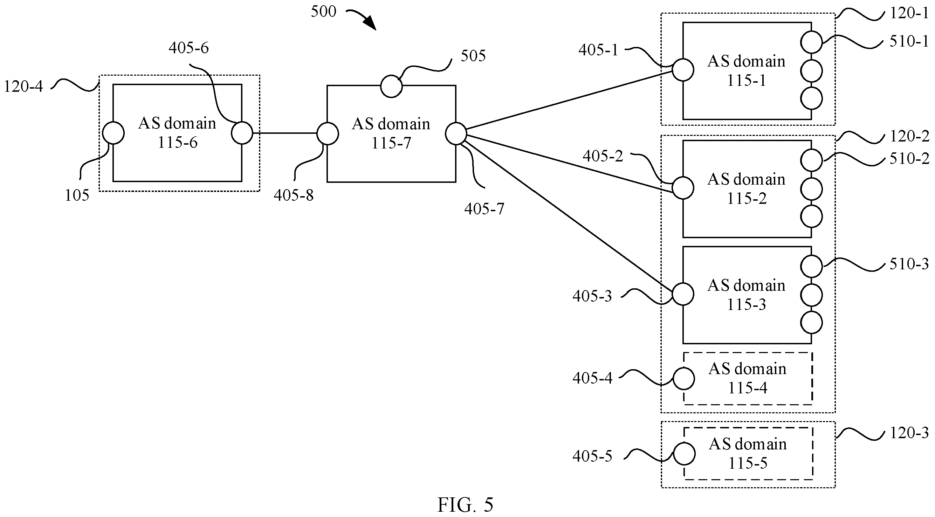

For example, the ID of the region to which the AS domain in which the ingress device 105 is located belongs is different from the ID of the region to which the AS domain in which the egress device is located belongs. In this way, in a scenario in which the ingress device 105 serves as the egress device, the intermediate device 110 and the ingress device communicating with the multicast source may implement transmission of a multicast packet based on the region ID of the ingress device 105 serving as the egress device. Specific embodiments of this aspect are described in detail below with reference to FIG. 4 and FIG. 5.

FIG. 2 is a schematic diagram of an interaction procedure of a multicast packet according to an embodiment of this application. A process 200 shown in FIG. 2 may be performed in the example scenario shown in FIG. 1. For ease of discussion, the following provides descriptions with reference to FIG. 1.

205: An ingress device 105 determines an identifier of a region 120 to which a multicast packet is to be sent.

In an implementation, the multicast packet from a multicast source may include an ID of a region to which an egress device communicating with a multicast receiver belongs. The ingress device 105 may determine the region ID based on the received multicast packet. In another possible implementation, there may be a mapping relationship or a correspondence between a field or a part of the multicast packet and the region ID. There may be a correspondence between a destination address included in the multicast packet and the region ID. The ingress device 105 may determine the region ID based on the correspondence and the destination address in the received multicast packet.

210: The ingress device 105 obtains a second forwarding entry 155 based on the region ID.

For example, the second forwarding entry 155 includes the region ID and an address of an intermediate device 110. As shown in FIG. 1, the forwarding table 150 stores a correspondence between the region ID and the address of the intermediate device. The ingress device 105 searches a forwarding table 150 based on the region ID, and may obtain the second forwarding entry 155 that includes the region ID and the address of the intermediate device 110. The forwarding table 150 may be statically configured. For example, the forwarding table 150 may be manually configured. The forwarding table 150 may further be dynamically configured, to further improve configuration and update efficiency of the forwarding table. For details, refer to related content of FIG. 1.

215: The ingress device 105 sends the multicast packet to the intermediate device 110 based on the determined address.

For example, the ingress device 105 may encapsulate the determined address of the intermediate device 110 into a destination address of the multicast packet. In a possible implementation, the multicast packet may include the ID of the region 120 to which the multicast packet is to be sent, to explicitly indicate the region ID to the intermediate device 110. Optionally, the multicast packet may further include a BFR-id range corresponding to an AS domain in which the egress device is located and to which the multicast packet needs to be sent. In another possible implementation, there may be a mapping relationship or a correspondence between the region ID and the identifier of the intermediate device 110. The identifier of the intermediate device 110 may be any proper information that can be used to identify the intermediate device 110. For example, the information includes the address of the intermediate device 110. The ingress device 105 may add the identifier of the intermediate device 110 to the multicast packet, to implicitly indicate the region ID to the intermediate device 110. The identifier of the intermediate device 110 may be included in any proper part of the multicast packet. For example, the ingress device 105 may add the identifier of the intermediate device 110 to a destination address field of the multicast packet. In this way, a structure of the multicast packet can be simplified, to better implement backward compatibility. The intermediate device 110 may obtain the region ID based on the correspondence and the identifier that is of the intermediate device 110 and that is included in the multicast packet.

In this way, the ingress device 105 needs to send only one packet to one region 120 without sending the packet to all AS domains 115, to improve multicast efficiency.

220: After receiving the multicast packet whose destination address is the address of the intermediate device 110, the intermediate device 110 determines the ID of the region 120 to which the multicast packet is to be sent.

In an embodiment in which the multicast packet includes the ID of the region 120 to which the multicast packet is to be sent, the intermediate device 110 may obtain the region ID from the multicast packet. In an embodiment in which the multicast packet includes the identifier of the intermediate device 110 (for example, the address of the intermediate device 110), the intermediate device 110 may determine the region ID based on the identifier that is of the intermediate device 110 and that is included in the multicast packet and the correspondence between the region ID and the intermediate device 110. A plurality of identifiers (or addresses) may be assigned to the intermediate device 110. Identifiers of the intermediate device 110 correspond to different region IDs. After receiving the multicast packet, the intermediate device 110 may obtain the identifier of the intermediate device 110 from the multicast packet (for example, from the destination address field or a part of the multicast packet), and then determine the corresponding region ID.

225: The intermediate device 110 obtains a first forwarding entry 130 based on the region ID.

For example, the intermediate device 110 may search a forwarding table 125 based on the determined region ID, to obtain the first forwarding entry 130. In an embodiment in which the region 120 includes a plurality of AS domains 115, the intermediate device 110 may find, in the forwarding table 125, the plurality of forwarding entries 130 corresponding to the region ID of the region 120. For example, for a region 120-2 including AS domains 115-2 and 115-3, a region identifier 2 of the region 120-2 and forwarding entries 130-2 and 130-3 may be found. If the forwarding entries 130-2 and 130-3 further include BFR-id ranges respectively corresponding to the AS domains 115-2 and the 115-3, and the multicast packet further includes the BFR-id range, the intermediate device 110 may determine the corresponding forwarding entry 130-2 or 130-3 based on the BFR-id range included in the multicast packet. The forwarding table 125 at the intermediate device 110 may be statically or dynamically configured. A static configuration method may be manual configuration. For a dynamic configuration method, refer to corresponding content in FIG. 1. During network expansion, the intermediate device 110 may receive information from a newly added AS domain, and correspondingly update the forwarding table 125, to significantly improve configuration and update efficiency of the forwarding table.

230: The intermediate device 110 sends the multicast packet to a next-hop device 140 based on an address that is of the next-hop device 140 and that is included in the first forwarding entry 130.

For example, for a region 120-1 including only one AS domain 115-1, after obtaining a forwarding entry 130 including an ID of the region 120-1, the intermediate device 110 may directly send the multicast packet to the AS domain 115-1 of the region 120-1 without performing replication processing on the received multicast packet. For the region 120-2 including the plurality of AS domains 115-2 and 115-3, the intermediate device 140 may perform replication processing on the multicast packet, to send the multicast packet and the replicated multicast packet to the AS domains 115-2 and 115-3 in the region 120-2.

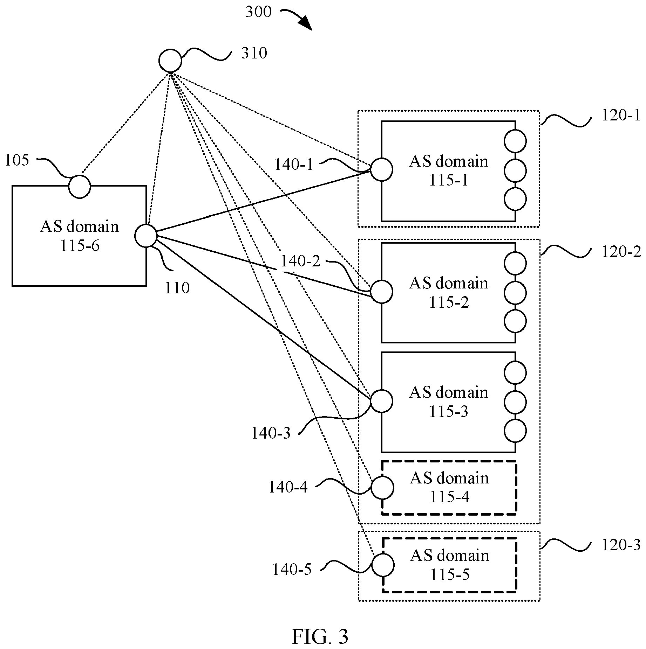

The following discusses an example process of sending a multicast packet by using the method provided in the embodiments of this application with reference to FIG. 3, FIG. 4, and FIG. 5.

FIG. 3 shows a multicast scenario according to an embodiment of this application. For ease of discussion, the following describes a scenario 300 shown in FIG. 3 with reference to FIG. 1.

A difference between the scenario 300 and the scenario 1 is that AS domains 115-4 and 115-5 are AS domains added after network expansion. A region 120-2 includes the AS domain 115-4. A region 120-3 includes the AS domain 115-5. The ingress device 105 and the intermediate device 110 are located in the same AS domain 115-6 of a backbone network. The ingress device 105 may be implemented by a PE device of the AS domain 115-6. The intermediate device 110 may be implemented by anASBR of the AS domain 115-6. A next-hop device 140-4 belongs to the AS domain 115-4. The next-hop device 140-5 belongs to the AS domain 115-5. For descriptions of the same structure, refer to corresponding content of the scenario shown in FIG. 1.

The next-hop devices 140-1, 140-2, and 140-3 may directly send the following information to the intermediate device 110, or may send the following information to the intermediate device 110 by using an RR 310. For example, the information advertised by the next-hop devices 140-1, 140-2, and 140-3 is as follows:

Information advertised by the next-hop device 140-1 is (Color=2, IPv6 address <ASBR2>, BFR-id=1-256).

Information advertised by the next-hop device 140-2 is (Color=3, IPv6 address <ASBR3>, BFR-id=1-44).

Information advertised by the next-hop device 140-3 is (Color=3, IPv6 address <ASBR4>, BFR-id=45-144).

Herein, Color=2 represents the region ID of the region 120-1, ASBR2 represents the device 140-1, IPv6 address <ASBR2> represents an IPv6 address of the device 140-1, and BFR-id=1-256 represents the BFR-id range corresponding to the AS domain 115-1. Herein, Color=3 represents the ID of the region 120-2, ASBR3 represents the device 140-2, IPv6 address <ASBR3> represents an IPv6 address of the device 140-2, and BFR-id=1-44 represents the BFR-id range corresponding to the AS domain 115-2. Herein, Color=3 represents the ID of the region 120-2, ASBR4 represents the device 140-3, IPv6 address <ASBR4> represents an IPv6 address of the device 140-3, and BFR-id=45-144 represents the BFR-id range corresponding to the AS domain 115-3.

The intermediate device 110 establishes the forwarding table 125 based on the received information. In this example, the forwarding table 125 includes a plurality of forwarding entries 130 in the following:
- (Color=2, BFR-id=1-256, Next Hop=IPv6 address <ASBR2>)
- (Color=3, BFR-id=1-44, Next Hop=IPv6 address <ASBR3>)
- (Color=3, BFR-id=45-144, Next Hop=IPv6 address <ASBR4>)

After the multicast packet from the ingress device 105 arrives at the intermediate device 110, the intermediate device 110 first determines the region ID of the region 120. In a possible implementation, the multicast packet (for example, a BIERv6 multicast packet) may carry a Color value used to indicate the region ID. In another possible implementation, the intermediate device 110 may obtain a correspondence between the Color value and the identifier of the intermediate device 110. The intermediate device 110 determines, based on the correspondence and the identifier that is of the intermediate device 110 and that is included in the multicast packet, the Color value used to indicate the region ID. The Color value corresponds to the address of the intermediate device 110. For example, Color=2 corresponds to an address 2001:db1::2, and Color=3 corresponds to an address 2001:db1::3. The correspondence may be statically or dynamically configured. If the destination address of the multicast packet received by the intermediate device 110 is 2001:db1::2, it may be determined that the multicast packet is to be sent to the region 120-1 identified by Color=2. The intermediate device 110 further determines a next-hop address based on a BFR-id range included in the multicast packet. For example, in an embodiment in which the multicast packet is a BIERv6 multicast packet, the intermediate device 110 may determine the BFR-id range based on a bit string included in the BIERv6 packet. The intermediate device 110 determines, based on the BFR-id range and the forwarding table 125, that the next-hop address is the IPv6 address <ASBR2>. For the region 120-2 including the AS domains 115-2 and 115-3, after determining, based on the destination address 2001:db1::3 of the multicast packet, the region 120-2 identified by Color=3, the intermediate device 110 further determines, based on the BFR-id range included in the multicast packet, that the next-hop address is one or more of IPv6 address <ASBR3> and IPv6 address <ASBR4>. If the multicast packet needs to be sent to a plurality of next-hop devices, the intermediate device 110 may perform replication processing on the bit string in the multicast packet, to send the multicast packet to the AS domains 115-2 and 115-3.

In the scenario 300, the intermediate device 110 may indicate to advertise the region ID, the corresponding address of the intermediate device 110, and optional BFR-id range information to the ingress device 105. The intermediate device 110 may advertise the information to the ingress device 105 by using the RR 310, or may directly advertise the information to the ingress device 105. In this example, the intermediate device 110 may send the following information to the ingress device 105:
- (Color=2, IPv6 address=2001:db1::2)
- (Color=2, BFR-id=1-256)
- (Color=3, IPv6 address=2001:db1::3)
- (Color=3, BFR-id=1-44)
- (Color=3, BFR-id=45-144)

The foregoing information includes a (Color, IPv6 address) correspondence. The IPv6 address represents the IPv6 address of the intermediate device 110. The IPv6 address corresponds to the region ID. Optionally, the information further includes information about a BFR-id range of each AS domain in the region identified by the Color value, that is, (Color, BFR-id) information.

After receiving the information advertised by the intermediate device 110, the ingress device 105 may obtain the following forwarding entries 155:
- (Color=2, BFR-id=1-256, Next Hop=2001:db1::2)
- (Color=3, BFR-id=1-44, Next Hop=200 1: db 1:: 3)
- (Color=3, BFR-id=45-144, Next Hop=2001:db1::3)

Optionally, the latter two forwarding entries 155 may be combined as follows:
- (Color=2, BFR-id=1-256, Next Hop=2001:db1::2)
- (Color=3, BFR-id=1-144, Next Hop=200 1: db 1:: 3)

Both Next Hop=2001:db1::2 and Next Hop=2001:db1::3 are addresses of the intermediate device 110. Different addresses correspond to regions identified by different Color values. In addition, BFR-id=1-256 and BFR-id=1-144 are optional parameters.

In the scenario 300, a network is expanded. For example, anAS domain 115-4 is added. The AS domain 115-4 corresponds to 112 BFR-ids. A total of 256 BFR-ids are obtained when BFR-ids corresponding to the AS domain 115-4 are combined with those corresponding to the AS domains 115-2 and 115-3. The next-hop device 140-4 of the AS domain 115-4 advertises the region ID, the address of the next-hop device 140-4, and the BFR-id range corresponding to the AS domain 115-4 to the intermediate device 110. For example, the device 140-4 may advertise the following information to the intermediate device 110 by using the RR 310: (Color=3, IPv6 address <ASBR5>, BFR-id=145-256). Herein, Color=3 represents the region ID of the region 120-2, ASBR5 represents the device 140-4, and IPv6 address <ASBR5> represents an IPv6 address of the device 140-4.

After receiving the foregoing information, the intermediate device 110 adds an entry: (Color=3, BFR-id=145-256, Next Hop=IPv6 address <ASBR5>) to the forwarding table 125. The intermediate device 110 may advertise the added information (Color=3, BFR-id=145-256, Next Hop =2001:db1::3) to the ingress device 105 by using the RR 310. Herein, Next Hop=2001:db1::3 is an address corresponding to the intermediate device 110 in the region 120-2.

After receiving the foregoing information, the ingress device 105 creates the following forwarding entries 155 to update the forwarding table 150:
- (Color=2, BFR-id=1-256, Next Hop=2001:db1::2)
- (Color=3, BFR-id=1-256, Next Hop=2001:db1::3)

When the AS domain 115-4 is added during the network expansion, configuration needs to be performed only on the device 140-4 during the expansion. Other devices or nodes do not need to be further configured. The ingress device and the intermediate device can automatically update their forwarding tables, to improve update efficiency of the forwarding table.

For example, the network is continuously expanded. For example, an AS domain 115-5 is further added, and the AS domain 115-5 has 65500 BFR-ids. The AS domain 115-5 may be set to a new region 120-3, and Color=6 may be configured to indicate an ID of the region 120-3. The device 140-5 of the AS domain 115-5 may advertise the region ID, the address of the device 140-5, and the BFR-id range corresponding to the AS domain 115-5 to the intermediate device 110 by using the RR 310. The advertised information is, for example, (Color=6, IPv6 address <ASBR6>, BFR-id=1-65500). Herein, Color=6 represents the region ID of the region 120-3, ASBR6 represents the device 140-5, and IPv6 address <ASBR6> represents an IPv6 address of the device 140-5.

After receiving the foregoing information, the intermediate device 110 adds an entry (Color=6, BFR-id=1-65500, Next Hop=IPv6 address <ASBR6>) to the forwarding table 125. The intermediate device 110 advertises the added information (Color=6, BFR-id=1-65500, Next Hop =2001:db1::6) to the ingress device 105 by using the RR 310. After receiving the foregoing information, the ingress device 105 creates the following forwarding entries 155 to update the forwarding table 150:
- (Color=2, BFR-id=1-256, Next Hop=2001:db1::2)
- (Color=3, BFR-id=1-256, Next Hop=2001:db1::3)
- (Color=6, BFR-id=1-65500, Next Hop=2001:db1::6)

Herein, 2001:db1::6 is another IPv6 address of the intermediate device 110, and corresponds to a region ID indicated by Color=6. The address may be dynamically applied by the intermediate device 110 based on a received Color value. In this case, no additional configuration is required, to improve efficiency. In addition, the intermediate device 110 may also configure an address corresponding to Color=6. No additional configuration is required for the ingress device 105 in these two manners.

The following discusses example multicast configuration of a multicast mechanism using the embodiments of this application. A BGP route may use a BGP IPv6 unicast (BGP IPv6-Unicast) address family, or may use another address family, for example, a BGP link state (BGP-LS) address family. Alternatively, it may be a newly created address family, for example, a BIER address family. For example, the IPv6-Unicast address family may be used and advertised by using the RR 310. In this example, the device 140-1 is represented as the ASBR2, the device 140-2 is represented as the ASBR3, the device 140-3 is represented as the ASBR4, the intermediate device 110 is represented as an ASBR1b, and the ingress device 105 is represented as a PE1. These devices can be configured as follows:

```
              #ASBR2 configuration
              Bgp 65002
                Ipv6-family unicast
                Peer 2001:db1::9999 enable
                Peer 2001:db1::9999 reflect-client ##Configure a peer to an RR
                Peer 2001:db1::9999 route-policy
rp_out_ bier export ##Configure an egress route policy
              Route-policy rp_out_ bier permit node 10 ##
                  Advertise-bier-information bfr-id 1
to 256 color 2 ##Advertise BIER information and carry a
                  color value
              #ASBR3 configuration
              Bgp 65003
                     Ipv6-family unicast
                    Peer 2001:db1::9999 enable
                    Peer 2001:db1::9999 reflect-client ##Configure a peer to an RR
                    Peer 2001:db1::9999 route-policy
rp_out_bier export ##Configure an egress route policy
                  Route-policy rp_out_ bier permit node 10 ##
                       Advertise-bier-information bfr-id 1
to 44 color 3 ##Advertise BIER information and carry
                       a color value
              #ASBR4 configuration
              Bgp 65004
                     Ipv6-family unicast
                    Peer 2001:db1::9999 enable
                    Peer 2001:db1::9999 reflect-client ##Configure a peer to an RR
                    Peer 2001:db1::9999 route-policy
rp_out_bier export ##Configure an egress route policy
                  Route-policy rp_out_ bier permit node 10 ##
                       Advertise-bier-information bfr-id
45 to 144 color 3 ##Advertise BIER information and
                       carry a color value
              #RR configuration
              Bgp 65009
                Ipv6-family unicast
                Peer 2001:db1: :2222 enable ##Configure a peer to the ASBR2
                Peer 2001:db1::3333 enable ##Configure a peer to the ASBR3
                Peer 2001:db1::4444 enable ##Configure a peer to the ASBR4
              Peer 2001:db1::111b enable ##Configure a peer to the ASBR1b
              Peer 2001:db1:: 1010 enable ##Configure a peer to the PE1
              #ASBR1b configuration
              bier sub-domain 6 ipv6-underlay
               bfr-prefix 2001 :db1:111b::
               color 2 bgp
              end-bier 2001:db1:111b::2
               color 3 bgp
              end-bier 2001:db1:111b::3
              color 6 bgp
              end-bier auto-obtained
              Bgp 65001
                Ipv6-family unicast
                Peer 2001:db1::9999 enable
                Peer 2001:db1::9999 reflect-client ##Configure a peer to an RR
                Peer 2001:db1::9999 route-policy
rp_out_bier export ##Configure an egress route policy
              Route-policy rp_out_ bier permit node
10 ##Specific configuration example of Route-Policy
                  Advertise-bier-information color 2 ipv6-address 2001:db1:111b::2
                  Advertise-bier-information color 3 ipv6-address 2001:db1:111b::3
                  Advertise-bier-information color 6 ipv6-address 2001:db1:111b::6
                  Advertise-bier-information bfr-id 1
to 256 color 2 #Advertise BIER information and carry a color
                  value
                  Advertise-bier-information bfr-id 1 to
256 color 3 ##Advertise BIER information and carry a
                  color value
                  Advertise-bier-information bfr-id 1
to 65535 color 6 #Advertise BIER information and carry a
                  color value
              #PE1 configuration
              Bgp 65001
                Ipv6-family unicast
                Peer 2001:db1::9999 enable
                Peer 2001:db1::9999 reflect-client ##Configure a peer to an RR
```

FIG. 4 shows another multicast scenario according to an embodiment of this application.

Different from the scenario 100 in FIG. 1 and the scenario 300 in FIG. 3, in a scenario 400 shown in FIG. 4, the ingress device 105 and the intermediate device 110 are located in different AS domains. As shown in FIG. 4, the ingress device 105 is located in an AS domain 115-6 of a metropolitan area network, for example, implemented as a PE device in the AS domain 115-6. The intermediate device 110 is located in an AS domain 115-7 of a backbone network, for example, implemented as an ASBR in the AS domain 115-7. In addition, different from the scenario 300, another ASBR 405-7 in the AS domain 115-7 serves as a next-hop device associated with the AS domains 115-1, ..., and 115-5. Multicast packets sent to the AS domains 115-1, ..., and 115-5 are forwarded to the ASBRs 405-1, ..., and 405-5 of these AS domains 115-1, ..., and 115-5 by using the ASBR 405-7. A BGP neighbor may be established between the RR 310 and each of the intermediate device 110 and the ASBR 405-7, so that the ASBR 405-7 advertises related routing information to the intermediate device 110 by using the RR 310. In the scenario 400, the AS domain 115-6 belongs to a region 120-4 that has a region ID different from the regions 120-1, 120-2, and 120-3. Correspondingly, establishing the forwarding table 125 at the intermediate device 110 may include a forwarding entry with the ingress device 105 as a multicast destination. The forwarding entry records the region ID of the region 120-4. In this example, the ASBR 405-6 of the AS domain 115-6 serves as a next-hop device associated with the region 120-4. The region ID of the ingress device 105, the address of the associated next-hop device, and the BFR-id range of the region 120-4 may be advertised by the ASBR 405-6 to the intermediate device 110 by using the RR 310. Because the region 120-4 in which the ingress device 105 is located is different from the region IDs of the regions 120-1, 120-2, and 120-3, when routing information is advertised by using the RR 310, the RR 310 may distinguish between destination devices of routing information based on the region IDs.

FIG. 5 shows another multicast scenario according to an embodiment of this application. In a scenario 500 shown in FIG. 5, ASBRs 405-1, ..., and 405-7 are respectively ASBRs in AS domains 115-1, ..., and 115-7, and an ASBR 405-8 is another ASBR in the AS domain 115-7. Both 405-7 and 405-8 can serve as intermediate devices. In this example, routing information is not advertised by using an RR, but is directly advertised by each device to upstream and downstream devices.

In the scenario 500, the ASBRs 405-1, ..., and 405-5 of the AS domains 115-1, ..., and 115-5 serve as original route advertisers. The following routing information is advertised:
The routing information advertised by the ASBR 405-1 is (prefix=ASBR2, NextHop=ASBR2, Color=2, BIER-info=<BFR-id-range 1 to 256>).

The routing information advertised by the ASBR 405-2 is (prefix=ASBR3, NextHop=ASBR3, Color=3, BIER-info=<BFR-id-range 1 to 44>).

The routing information advertised by the ASBR 405-3 is (prefix=ASBR4, NextHop=ASBR4, Color=3, BIER-info=<BFR-id-range 45 to 144>).

The routing information advertised by the ASBR 405-4 is (prefix=ASBR5, NextHop=ASBR5, Color=3, BIER-info=<BFR-id-range 145 to 256>).

The routing information advertised by the ASBR 405-5 is (prefix=ASBR6, NextHop=ASBR6, Color=6, BIER-info=<BFR-id-range 1 to 65500>).

Herein, a prefix (prefix) field is used to carry an IP address prefix, and a NextHop (next hop) field is used to carry an IP address. Herein, BIER-info represents BIER information, and BFR-id-range represents a BFR-id range. The ASBR2, the ASBR3, the ASBR4, the ASBR5, and the ASBR6 respectively represent the ASBRs 405-1, 405-2, 405-3, 405-4, and 405-5.

The ASBR 405-6 of the next-hop device associated with the AS domain 115-6 is also an original route advertiser. The ASBR 405-6 advertises the following routing information about the AS domain 115-6:
- (prefix=ASBR0, NextHop=ASBR0, Color=7, BIER-info=<BFR-id-range 1 to 256>)

Herein, ASBR0 represents the ASBR 405-6, and Color=7 represents a region ID of the region 120-4 to which the AS domain 115-6 belongs.

The ASBR 405-8 and the ASBR 405-7 are not original route advertiser, but advertise, again to another internal BGP (iBGP) peer or another external BGP (eBGP) peer, routing information advertised by another device. For example, the ASBR 405-7 may receive corresponding routing information from the ASBRs 405-1, ..., and 405-5 as eBGP peers, then advertise the routing information to the ASBR 405-8 as an iBGP peer, and change a next hop of the route to the ASBR 405-7 during the advertising. This may be implemented by using a route policy. The ASBR 405-8 may receive routing information from the ASBR 405-6 as the eBGP peer, then advertise the routing information to the ASBR 405-7 as the iBGP peer, and change a next hop of the route to the ASBR 405-8 by using the route policy during the advertising. The ASBR 405-8 and the ASBR 405-7 may further advertise the routing information to a PE 505 serving as the iBGP peer in the same AS domain 115-7. The PE 505 may serve as an ingress device for the AS domain 115-7. In this case, the ASBR 405-7 may serve as an intermediate device associated with the ASBR 405-7. In this way, the PE 505 may obtain the following routing information. Herein, an ASBR1b represents the ASBR 405-7, and an ASBR1a represents the ASBR 405-8:
- (prefix=ASBR2, NextHop=ASBR1b, Color=2, BIER-info=<BFR-id-range 1 to 256>)
- (prefix=ASBR3, NextHop=ASBR1b, Color=3, BIER-info=<BFR-id-range 1 to 44>)
- (prefix=ASBR4, NextHop=ASBR1b, Color=3, BIER-info=<BFR-id-range 45 to 144>)
- (prefix=ASBR5, NextHop=ASBR1b, Color=3, BIER-info=<BFR-id-range 145 to 256>)
- (prefix=ASBR6, NextHop=ASBR1b, Color=6, BIER-info=<BFR-id-range 1 to 65500>)
- (prefix=ASBR0, NextHop=ASBR1a, Color=7, BIER-info=<BFR-id-range 1 to 256>)

On this basis, the PE 505 can establish the following BIER forwarding entries to the AS domains 115-1, ..., and 115-6:
- (Color=2, BFR-id=1-256, Next Hop=ASBR1b)
- (Color=3, BFR-id=1-256, Next Hop=ASBR1b)
- (Color=4, BFR-id=1-65550, Next Hop=ASBR1b)
- (Color=7, BFR-id=1-256, Next Hop=ASBR1a)

In the scenario 500, when the ASBR 405-7 advertises routing information received from the ASBRs 405-1, ..., and 405-5 as eBGP peers to the PE 505 and the ASBR 405-8 as the iBGP peers, the ASBR 405-7 may set an address of a next hop to one or more identifiers of the ASBR 405-7, to indicate a corresponding region ID. In this way, after the ASBR 405-7 receives the multicast packet, the ASBR 405-7 may determine the corresponding region ID based on the identifier included in the multicast packet. In this way, the PE 505 may obtain the following routing information:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)
- (prefix=ASBR0, NextHop=ASBR1a, Color=7, BIER-info=<BFR-id-range 1 to 256>)

Herein, the ASBR1b2, the ASBR1b3, the ASBR1b6, and the ASBR1a respectively correspond to identifiers of the ASBR 405-7 corresponding to region IDs: Color=2, Color=3, Color=6, and Color=7.

On this basis, the PE 505 can establish the following BIER forwarding entries to the AS domains 115-1, ..., and 115-6:
- (Color=2, BFR-id=1-256, Next Hop=ASBR1b2)
- (Color=3, BFR-id=1-256, Next Hop=ASBR1b3)
- (Color=4, BFR-id=1-65550, Next Hop=ASBR1b6)
- (Color=7, BFR-id=1-256, Next Hop=ASBR1a)

In addition, the ASBR 405-8 may obtain the following routing information:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)
- (prefix=ASBR0, NextHop=ASBR0, Color=7, BIER-info=<BFR-id-range 1 to 256>)

On this basis, the ASBR 405-8 can establish BIER forwarding entries to the AS domains 115-1, ..., and 115-6. A next hop of the BIER forwarding entry established by the ASBR 405-8 to the AS domain 115-6 is the ASBR 405-6.

Similarly, the ASBR 405-7 may obtain the following routing information:
- (prefix=ASBR2, NextHop=ASBR2, Color=2, BIER-info=<BFR-id-range 1 to 256>)
- (prefix=ASBR3, NextHop=ASBR3, Color=3, BIER-info=<BFR-id-range 1 to 44>)
- (prefix=ASBR4, NextHop=ASBR4, Color=3, BIER-info=<BFR-id-range 45 to 144>)
- (prefix=ASBR5, NextHop=ASBR5, Color=3, BIER-info=<BFR-id-range 145 to 256>)
- (prefix=ASBR6, NextHop=ASBR6, Color=6, BIER-info=<BFR-id-range 1 to 65500>)
- (prefix=ASBR0, NextHop=ASBR1a, Color=7, BIER-info=<BFR-id-range 1 to 256>)

On this basis, the ASBR 405-7 can establish BIER forwarding entries to the AS domains 115-1, ..., and 115-6. Next hops of the BIER forwarding table established by the ASBR 405-7 to the AS domains 115-1, ..., and 115-5 are the ASBRs 405-1, ..., and 405-5.

In a possible implementation, the ASBR 405-8 does not advertise, again to the ASBR 405-6, the routing information advertised from the ASBR 405-6, but advertises the routing information advertised from the ASBR 405-7 to the ASBR 405-6 without changing the next hop. This may be implemented by using a route policy. Correspondingly, the ASBR 405-6 may obtain the following routing information:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)

On this basis, the ASBR 405-6 can establish BIER forwarding entries to the AS domains 115-1, ..., and 115-5. The BIER forwarding entry of each BFR-id to the AS domain 115-6 from the ASBR 405-6 belongs to the AS domain, and may not be established by using a BGP message.

In a possible implementation, the ASBR 405-6 advertises the routing information advertised from the ASBR 405-8 to the ingress device 105 without changing the next hop. This may be implemented by using a route policy. Correspondingly, the ingress device 105 may obtain the following routing information:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)

On this basis, the ingress device 105 can establish BIER forwarding entries to the AS domains 115-1, ..., and 115-5. The BIER forwarding entry of each BFR-id to the AS domain 115-6 from the ingress device 105 belongs to the AS domain, and may not be established by using a BGP message.

In addition, the ASBR 405-7 may further advertise the received routing information to the ASBRs 405-1, ..., and 405-5. For example, the ASBR 405-7 may further advertise the routing information advertised by the ASBR 405-8 to the ASBRs 405-1, ..., and 405-5 without changing the next hop of the route.

The ASBR 405-7 may further advertise the routes advertised by the ASBRs 405-2, ..., and 405-6 to the ASBR 405-1, and change the next hops of the routes to the ASBR 405-7. The ASBR 405-1 may further advertise the route advertised from the ASBR 405-7 to a PE 510-1 (which can serve as the ingress device of the AS domain 115-1) in the AS domain 115-1 without changing the next hop of the route.

Correspondingly, both the ASBR 405-1 and the PE 510-1 may obtain the following routing information, and corresponding BIER forwarding entries may be established on this basis:
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)
- (prefix=ASBR0, NextHop=ASBR1a, Color=7, BIER-info=<BFR-id-range 1 to 256>)

The ASBR 405-7 may further advertise the routes advertised by the ASBRs 405-1, 405-3, 405-4, 405-5, and 405-6 to the ASBR 405-2, and change the next hop to the ASBR 405-7. The ASBR 405-2 may further advertise the route advertised from the ASBR 405-7 to a PE 510-2 (which can serve as the ingress device of the AS domain 115-2) without changing the next hop of the route.

Correspondingly, both the ASBR 405-2 and the PE 510-2 may obtain the following routing information, and corresponding BIER forwarding entries may be established on this basis:
- (prefix=ASBR2, NextHop=ASBR1b2, Color=2, BIER-info=<BFR-id-range 1 to 256>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)
- (prefix=ASBR0, NextHop=ASBR1a, Color=7, BIER-info=<BFR-id-range 1 to 256>)

The ASBR 405-7 may further advertise the routes advertised by the ASBRs 405-1, 405-2, 405-4, 405-5, and 405-6 to the ASBR 405-3, and change the next hop to the ASBR 405-7. The ASBR 405-3 may further advertise the route advertised from the ASBR 405-7 to the PE 510-3 (which can serve as the ingress device of the AS domain 115-3) without changing the next hop of the route.

Both the ASBR 405-3 and the PE 510-3 may obtain the following routing information, and corresponding BIER forwarding entries may be established on this basis:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR5, NextHop=ASBR1b3, Color=3, BIER-info=<BFR-id-range 145 to 256>)
- (prefix=ASBR6, NextHop=ASBR1b6, Color=6, BIER-info=<BFR-id-range 1 to 65500>)
- (prefix=ASBR0, NextHop=ASBR1a, Color=7, BIER-info=<BFR-id-range 1 to 256>)

Similarly, the ASBR 405-4 may obtain the following routing information, and corresponding BIER forwarding entries may be established on this basis:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR6, NextHop=ASBR1b6, Color=6, BIER-info=<BFR-id-range 1 to 65500>)
- (prefix=ASBR0, NextHop=ASBR1a, Color=7, BIER-info=<BFR-id-range 1 to 256>)

The ASBR 405-5 may obtain the following routing information, and corresponding BIER forwarding entries may be established on this basis:
- (prefix=ASBR2, NextHop=ASBR1b2, Color=2, BIER-info=<BFR-id-range 1 to 256>)
- (prefix=ASBR3, NextHop=ASBR1b3, Color=3, BIER-info=<BFR-id-range 1 to 44>)
- (prefix=ASBR4, NextHop=ASBR1b3, Color=3, BIER-info=<BFR-id-range 45 to 144>)
- (prefix=ASBR5, NextHop=ASBR1b3, Color=3, BIER-info=<BFR-id-range 145 to 256>)
- (prefix=ASBR0, NextHop=ASBR1a, Color=7, BIER-info=<BFR-id-range 1 to 256>)

In this example, the next hops that are of the ASBR 405-1, ..., and 405-5 and that are recorded by the ingress device 105 and the ASBR 405-6 are all the ASBR 405-7. If an IPv6 unicast route (that is, an IPv6 Unicast address family) is used, a corresponding unicast forwarding table may be not generated for the IPv6 unicast route, but a BIER forwarding table is generated. This may be implemented by using a route policy for the IPv6 unicast route. If another address family is used, for example, an IPv6 multicast route (that is, an IPv6 Multicast address family) can be used, a unicast forwarding table is not generated for the IPv6 multicast route, and only a BIER forwarding table needs to be generated based on these IPv6 multicast routes and region ID information (for example, a Color value) and BIER information (for example, a BFR-id range) carried in the IPv6 multicast routes.

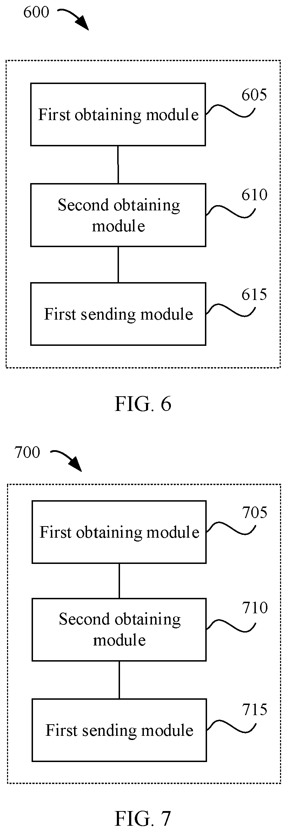

FIG. 6 is a schematic diagram of a structure of an apparatus for sending a multicast packet according to an embodiment of this application. The apparatus 600 shown in FIG. 6 may be disposed in the intermediate device in any embodiment corresponding to FIG. 1 to FIG. 5. The following describes the apparatus 600 with reference to FIG. 1 and FIG. 6.

As shown in FIG. 6, the apparatus 600 includes a first obtaining module 605, a second obtaining module 610, and a first sending module 615. The first obtaining module 605 is configured to obtain, based on a multicast packet from an ingress device, an identifier of a region corresponding to the multicast packet. The second obtaining module 610 is configured to obtain an address of a next-hop device based on the region identifier and a forwarding entry. The forwarding entry includes the region identifier and the address of the next-hop device. The first sending module 615 is configured to send the multicast packet based on the address of the next-hop device.

In a possible implementation, the multicast packet includes the region identifier. The first obtaining module 605 is configured to obtain the region identifier from the multicast packet.

In a possible implementation, the first obtaining module 605 is configured to obtain, based on an identifier of an intermediate device in the multicast packet, an identifier of a region corresponding to the identifier of the intermediate device. The apparatus 600 may store a correspondence. The correspondence includes the identifier of the intermediate device and the identifier of the region.

In a possible implementation, the first obtaining module 605 is configured to obtain, based on an address of an intermediate device in the multicast packet, an identifier of a region corresponding to the address of the intermediate device. The apparatus 600 may store a correspondence. The correspondence includes the address of the intermediate device and the identifier of the region.

In a possible implementation, the apparatus 600 may further include: a first receiving module, configured to receive the address of the next-hop device and the identifier of the region to which the next-hop device belongs that are sent by the next-hop device; and a third obtaining module, configured to obtain the forwarding entry based on the region identifier and the address of the next-hop device.

In a possible implementation, the apparatus 600 may further include: a first receiving module, configured to receive an identifier of the next-hop device and an identifier of a region to which the next-hop device belongs that are sent by the next-hop device; and a third obtaining module, configured to obtain the address of the next-hop device based on the identifier of the next-hop device. The third obtaining module is configured to obtain the forwarding entry based on the region identifier and the address of the next-hop device. The apparatus 600 may store a correspondence. The correspondence includes the identifier of the next-hop device and the address of the next-hop device.

In a possible implementation, the first receiving module is further configured to receive a range that is of an identifier of a bit forwarding router BFR in a destination AS domain and that is sent by the next-hop device. The destination AS domain is an AS domain to which the next-hop device belongs and that is included in the region. The forwarding entry further includes the range of the identifier of the BFR in the destination AS domain. Correspondingly, the multicast packet further includes the range of the BFR identifier. The third obtaining module is configured to determine the forwarding entry based on the region identifier and the range of the BFR identifier.

In a possible implementation, the apparatus 600 may further include: a second sending module, configured to send, to the ingress device, the address of the intermediate device and an identifier of a region to which the intermediate device belongs.

In a possible implementation, the second sending module is further configured to send, to the ingress device, a range of an identifier of a BFR in an AS domain to which the intermediate device belongs. The AS domain to which the intermediate device belongs is included in the region to which the intermediate device belongs.

FIG. 7 is a schematic diagram of a structure of an apparatus for sending a multicast packet according to an embodiment of this application. The apparatus 700 shown in FIG. 7 may be disposed in the ingress device in any embodiment corresponding to FIG. 1 to FIG. 5. The following describes the apparatus 700 with reference to FIG. 1 and FIG. 7.

As shown in FIG. 7, the apparatus 700 includes a first obtaining module 705, a second obtaining module 710, and a first sending module 715. The first obtaining module 705 is configured to obtain an identifier of a region corresponding to a received multicast packet. The second obtaining module 710 is configured to obtain, based on an identifier of a region and a forwarding entry, an address that is of an intermediate device and that is used to forward a multicast packet to the region. The forwarding entry includes the region identifier and the address of the intermediate device. The first sending module 715 is configured to send the multicast packet based on the address of the intermediate device.

In a possible implementation, the apparatus 700 may further include: a second receiving module, configured to receive the address of the intermediate device and a region identifier that are sent by the intermediate device; and a third obtaining module, configured to obtain the forwarding entry based on the address of the intermediate device and the region identifier.

In a possible implementation, the apparatus 700 may further include: a second receiving module, configured to receive the identifier of the intermediate device and a region identifier that are sent by the intermediate device; and a third obtaining module, configured to determine an address of the intermediate device based on the identifier of the intermediate device. The third obtaining module is configured to obtain the forwarding entry based on the address of the intermediate device and the region identifier.

In a possible implementation, the second receiving module is further configured to receive a range that is of an identifier of a BFR in a destination autonomous system AS domain and that is sent by the intermediate device. The destination AS domain is an AS domain to which the multicast packet needs to be sent and that is included in the region. The forwarding entry further includes the range of the identifier of the BFR in the destination AS domain.

In a possible implementation, the second obtaining module 710 is configured to determine the forwarding entry based on the range of the identifier of the BFR in the destination AS domain and the region identifier.

In a possible implementation, the multicast packet includes the region identifier. The first obtaining module 705 is configured to obtain the region identifier from the multicast packet.

In a possible implementation, the multicast packet includes the identifier of the intermediate device. The first obtaining module 705 is configured to obtain, based on the identifier of the intermediate device in the multicast packet, an identifier of a region corresponding to the identifier of the intermediate device.

The modules included in the apparatuses 600 and 700 may be implemented in various manners, including software, hardware, firmware, or any combination thereof. In some embodiments, one or more modules may be implemented by using software and/or firmware, for example, machine executable instructions stored on a storage medium. In addition to or as an alternative to the machine executable instructions, some or all of the modules in the apparatuses 600 and 700 may be implemented at least partly by one or more hardware logic components. In an example instead of limitation, example types of hardware logic components that may be used include a field programmable gate array (FPGA), an application specific integrated circuit (ASIC), an application specific standard part (ASSP), an on-chip system (SOC), a complex programmable logic device (CPLD), and the like.

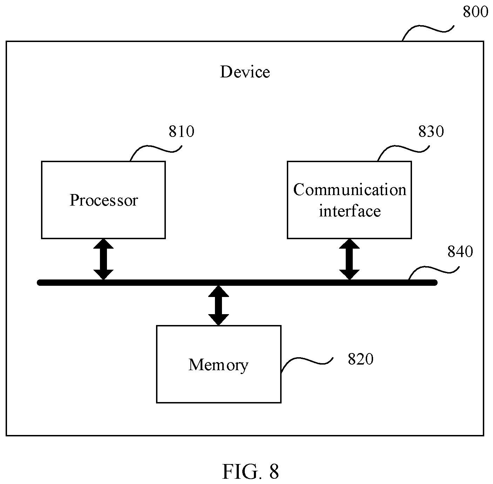

FIG. 8 is a block diagram of a device 800 according to some embodiments of this application. The device 800 can be used to implement an intermediate device or an ingress device provided in any one of the embodiments corresponding to FIG. 1 to FIG. 7. As shown in FIG. 8, the device 800 includes: a processor 810, a memory 820, a communications interface 830, and a communications bus 840. The processor 810, the memory 820, and the communications interface 830 may interact with each other by using the communications bus 840. The communications bus 840 may interact with an external device or apparatus. When the device 800 is disposed in an intermediate device, the memory 820 is configured to store instructions. The processor 810 is configured to: execute the instructions in the memory, and execute the method performed by the intermediate device provided in any one of the foregoing embodiments corresponding to FIG. 2 to FIG. 5. When the device 800 is disposed in an ingress device, the memory 820 is configured to store instructions. The processor 810 is configured to: execute the instructions in the memory, and execute the method performed by the ingress device provided in any one of the foregoing embodiments corresponding to FIG. 2 to FIG. 5. The memory 820 may be of any proper type applicable for a local technical environment, and may be implemented by using any proper data storage technology, including but not limited to a semiconductor-based storage device, a magnetic storage device and system, and an optical storage device and system. Although only one storage unit is shown in FIG. 8, there may be a plurality of physically different storage units in the device 800. The processor 810 may be any proper type applicable to a local technical environment, and may include but is not limited to one or more of a general purpose computer, a dedicated computer, a microcontroller, a digital signal controller (DSP), and controller-based multi-core controller architecture. The device 800 may alternatively include a plurality of processors 810. The processor 810 is coupled with the communications unit 840. The communication unit 840 may receive and transmit information through a radio signal or by using an optical fiber, a cable, and/or another component.

Generally, various example embodiments of this application may be implemented in hardware or a dedicated circuit, software, logic, or any combination thereof. Some aspects may be implemented in hardware, and other aspects may be implemented in firmware or software that can be executed by a controller, microprocessor, or another computing device. When the aspects of the example embodiments of this application are illustrated or described as block diagrams, flowcharts, or certain other graphical representations, it is understood that the blocks, apparatuses, systems, techniques, or methods described herein may be implemented as non-limited examples in hardware, software, firmware, dedicated circuits, logic, general purpose hardware, controllers, other computing devices, or combinations thereof.

For example, an example embodiment of this application may be described in a context of machine or computer-executable instructions. The machine-executable instructions are included in, for example, a program module executed by a component of a target real or virtual processor. Generally, the program module includes a routine, a program, an object, a type, a component, a data structure, and the like that perform particular tasks or implement a particular abstract data type. In each example embodiment, functions of a program module may be combined or segmented between the described program modules. The machine-executable instructions used for the program module may be executed in a local or distributed device. In the distributed device, the program module may be located in both local and remote storage media.

Computer program code used to implement the method in the embodiments of this application may be written in one or more programming languages. The computer program code may be provided to a processor of a general purpose computer, a dedicated computer, or another programmable data processing apparatus, so that the program code is executed by a computer or another programmable data processing apparatus to implement the functions/operations specified in the flowcharts and/or the block diagrams. The program code may be executed fully on a computer, partly on a computer, as an independent software package, partly on a computer and partly on a remote computer, or fully on a remote computer or server.

In the context of this embodiment of this application, the machine readable medium or the computer readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, a magnetic, an optical, an electromagnetic, an infrared, or a semiconductor system, apparatus, or device, or any proper combination of the foregoing content. A more specific example of the machine-readable storage medium includes an electrical connection based on one or more conducting wires, a portable computer disk, a hard disk, a random access memory (RAM), a read-only memory (ROM), an erasable programmable read-only memory (EPROM or flash memory), an optical storage device, a magnetic storage device, or any proper combination of the foregoing content.

In addition, although operations are depicted in a particular sequence, this is not to be understood as requiring such operations to be completed in a particular sequence or in a successive sequence, or requiring such operations to be performed shown in all the drawings to obtain the desired results. In some cases, multi-task processing or parallel processing is advantageous. Similarly, although the foregoing discussion includes certain specific implementation details, this should not be construed as limiting the scope of any invention or claims, but rather as a description of specific example embodiments that may be directed to a particular invention. Certain features described in the context of the separate example embodiments in this specification may also be integrated and implemented in a single example embodiment. Conversely, the various features described in the context of a single example embodiment may also be implemented separately in a plurality of example embodiments or in any proper subcombination.

Although this subject has been described in language specific to structural features and/or method operations, it should be understood that this subject defined in the appended claims is not necessarily limited to the specific features or operations described above. The specific features and operations described above are disclosed merely as example forms of the claims.

## Claims

1. A method for sending a multicast packet, wherein the method comprises:
obtaining, by an intermediate device based on a multicast packet from an ingress device, an identifier of a region corresponding to the multicast packet;
obtaining, by the intermediate device, an address of a next-hop device based on the region identifier and a forwarding entry, wherein the forwarding entry comprises the region identifier and the address of the next-hop device; and
sending, by the intermediate device, the multicast packet based on the address of the next-hop device.

2. The method according to claim 1, wherein the multicast packet comprises the region identifier, and the obtaining, by an intermediate device based on a multicast packet from an ingress device, an identifier of a region corresponding to the multicast packet comprises: obtaining, by the intermediate device, the region identifier from the multicast packet; or
the multicast packet comprises an identifier of the intermediate device, and the obtaining, by an intermediate device based on a multicast packet from an ingress device, an identifier of a region corresponding to the multicast packet comprises: obtaining, by the intermediate device based on the identifier of the intermediate device in the multicast packet, the identifier of the region corresponding to the identifier of the intermediate device.

3. The method according to claim 1 or 2, wherein the method further comprises:
receiving, by the intermediate device, the address of the next-hop device and the identifier of the region to which the next-hop device belongs that are sent by the next-hop device; and
obtaining, by the intermediate device, the forwarding entry based on the region identifier and the address of the next-hop device.

4. The method according to claim 1 or 2, wherein the method further comprises:
receiving, by the intermediate device, an identifier of the next-hop device and the identifier of the region to which the next-hop device belongs that are sent by the next-hop device;
obtaining, by the intermediate device, the address of the next-hop device based on the identifier of the next-hop device; and
obtaining, by the intermediate device, the forwarding entry based on the region identifier and the address of the next-hop device.

5. The method according to claim 3 or 4, wherein the method further comprises:
receiving, by the intermediate device, a range that is of an identifier of a bit forwarding router BFR in a destination AS domain and that is sent by the next-hop device, wherein the destination AS domain is an AS domain to which the next-hop device belongs and that is comprised in the region, and the forwarding entry further comprises the range of the identifier of the BFR in the destination AS domain.

6. The method according to claim 5, wherein the multicast packet further comprises the range of the BFR identifier, and the method further comprises:
determining, by the intermediate device, the forwarding entry based on the region identifier and the range of the BFR identifier.

7. The method according to any one of claims 1 to 6, wherein the method further comprises:
sending, by the intermediate device to the ingress device, the address of the intermediate device and an identifier of a region to which the intermediate device belongs.

8. The method according to claim 7, wherein the method further comprises:
sending, by the intermediate device to the ingress device, a range of an identifier of a BFR in an AS domain to which the intermediate device belongs, wherein the AS domain to which the intermediate device belongs is comprised in the region to which the intermediate device belongs.

9. A method for sending a multicast packet, wherein the method comprises:
obtaining, by an ingress device, an identifier of a region corresponding to a received multicast packet;
obtaining, by the ingress device based on the region identifier and a forwarding entry, an address of an intermediate device that is used to forward the multicast packet to the region, wherein the forwarding entry comprises the region identifier and the address of the intermediate device; and
sending, by the ingress device, the multicast packet based on the address of the intermediate device.

10. The method according to claim 9, wherein the method further comprises:
receiving, by the ingress device, the address of the intermediate device and the region identifier that are sent by the intermediate device; and
obtaining, by the ingress device, the forwarding entry based on the address of the intermediate device and the region identifier.

11. The method according to claim 9, wherein the method further comprises:
receiving, by the ingress device, an identifier of the intermediate device and the region identifier that are sent by the intermediate device;
determining, by the ingress device, the address of the intermediate device based on the identifier of the intermediate device; and
obtaining, by the ingress device, the forwarding entry based on the address of the intermediate device and the region identifier.

12. The method according to claim 10 or 11, wherein the method further comprises:
receiving, by the ingress device, a range that is of an identifier of a BFR in a destination autonomous system AS domain and that is sent by the intermediate device, wherein the destination AS domain is an AS domain to which the multicast packet needs to be sent and that is comprised in the region, and the forwarding entry further comprises the range of the identifier of the BFR in the destination AS domain.

13. The method according to claim 12, wherein the method further comprises:
determining, by the ingress device, the forwarding entry based on the range of the identifier of the BFR in the destination AS domain and the region identifier.

14. The method according to any one of claims 9 to 13, wherein the multicast packet comprises the region identifier, and the obtaining, by an ingress device, an identifier of a region corresponding to a received multicast packet comprises: obtaining, by the ingress device, the region identifier from the multicast packet; or
the multicast packet comprises the identifier of the intermediate device, and the obtaining, by an ingress device, an identifier of a region corresponding to a received multicast packet comprises: obtaining, by the ingress device based on the identifier of the intermediate device in the multicast packet, the identifier of the region corresponding to the identifier of the intermediate device.

15. An apparatus for sending a multicast packet, wherein the apparatus is disposed in an intermediate device, and the apparatus comprises:
a first obtaining module, configured to obtain, based on a multicast packet from an ingress device, an identifier of a region corresponding to the multicast packet;
a second obtaining module, configured to obtain an address of a next-hop device based on the region identifier and a forwarding entry, wherein the forwarding entry comprises the region identifier and the address of the next-hop device; and
a first sending module, configured to send the multicast packet based on the address of the next-hop device.

16. The apparatus according to claim 15, wherein the multicast packet comprises the region identifier, and the first obtaining module is configured to obtain the region identifier from the multicast packet; or
the multicast packet comprises an identifier of the intermediate device, and the first obtaining module is configured to obtain, based on the identifier of the intermediate device in the multicast packet, the identifier of the region corresponding to the identifier of the intermediate device.

17. The apparatus according to claim 15 or 16, wherein the apparatus further comprises:
a first receiving module, configured to receive the address of the next-hop device and the identifier of the region to which the next-hop device belongs that are sent by the next-hop device; and
a third obtaining module, configured to obtain the forwarding entry based on the region identifier and the address of the next-hop device.

18. The apparatus according to claim 15 or 16, wherein the apparatus further comprises:
a first receiving module, configured to receive an identifier of the next-hop device and the identifier of the region to which the next-hop device belongs that are sent by the next-hop device;
a third obtaining module, configured to obtain the address of the next-hop device based on the identifier of the next-hop device, wherein
the third obtaining module is configured to obtain the forwarding entry based on the region identifier and the address of the next-hop device.

19. The apparatus according to claim 17 or 18, wherein
the first receiving module is configured to receive a range that is of an identifier of a bit forwarding router BFR in a destination AS domain and that is sent by the next-hop device, wherein the destination AS domain is an AS domain to which the next-hop device belongs and that is comprised in the region, and the forwarding entry further comprises the range of the identifier of the BFR in the destination AS domain.

20. The apparatus according to claim 19, wherein the multicast packet further comprises the range of the BFR identifier, and the second obtaining module is configured to determine the forwarding entry based on the region identifier and the range of the BFR identifier.

21. The apparatus according to any one of claims 15 to 20, wherein the apparatus further comprises:
a second sending module, configured to send, to the ingress device, the address of the intermediate device and an identifier of a region to which the intermediate device belongs.

22. The apparatus according to claim 21, wherein
the second sending module is further configured to send, to the ingress device, a range of an identifier of a BFR in an AS domain to which the intermediate device belongs, wherein the AS domain to which the intermediate device belongs is comprised in the region to which the intermediate device belongs.

23. An apparatus for sending a multicast packet, wherein the apparatus is disposed in an ingress device, and the apparatus comprises:
a first obtaining module, configured to obtain an identifier of a region corresponding to a received multicast packet;
a second obtaining module, configured to obtain, based on the region identifier and a forwarding entry, an address of an intermediate device that is used to forward the multicast packet to the region, wherein the forwarding entry comprises the region identifier and the address of the intermediate device; and
a first sending module, configured to send the multicast packet based on the address of the intermediate device.

24. The apparatus according to claim 23, wherein the apparatus further comprises:
a first receiving module, configured to receive the address of the intermediate device and the region identifier that are sent by the intermediate device; and
a third obtaining module, configured to obtain the forwarding entry based on the address of the intermediate device and the region identifier.

25. The apparatus according to claim 23, wherein the apparatus further comprises:
a first receiving module, configured to receive an identifier of the intermediate device and the region identifier that are sent by the intermediate device; and
a third obtaining module, configured to determine the address of the intermediate device based on the identifier of the intermediate device, wherein
the third obtaining module is configured to obtain the forwarding entry based on the address of the intermediate device and the region identifier.

26. The apparatus according to claim 24 or 25, wherein a second receiving module is further configured to:
receive a range that is of an identifier of a BFR in a destination autonomous system AS domain and that is sent by the intermediate device, wherein the destination AS domain is an AS domain to which the multicast packet needs to be sent and that is comprised in the region, and the forwarding entry further comprises the range of the identifier of the BFR in the destination AS domain.

27. The apparatus according to claim 26, wherein
the second obtaining module is configured to determine the forwarding entry based on the range of the identifier of the BFR in the destination AS domain and the region identifier.

28. The apparatus according to any one of claims 23 to 27, wherein the multicast packet comprises the region identifier, and the first obtaining module is configured to obtain the region identifier from the multicast packet; or
the multicast packet comprises the identifier of the intermediate device, and the first obtaining module is configured to obtain, based on the identifier of the intermediate device in the multicast packet, the identifier of the region corresponding to the identifier of the intermediate device.

29. A system, wherein the system comprises the apparatus according to any one of claims 15 to 22 and the apparatus according to any one of claims 23 to 28.
